# FASCICULE DE BREVET EUROPEEN

(11) **EP 0 674 155 B1**
(45) Date de publication et mention de la délivrance du brevet: **12.05.1999**
(21) Numéro de dépôt: 95400470.1
(22) Date de dépôt: 03.03.1995
(51) Int. Cl.: G01F 1/74, G01F 1/66, G01F 1/712

(54) **Procédé et dispositif de mesure non-intrusive et d'asservissement des débits des différentes phases d'un fluide polyphasique s'écoulant dans une canalisation de transport**
Methode und Vorrichtung zur nichtintrusiven Messung und zur Regelung der verschiedenen Phasen des Flusses eines Mehrphasenfluides in einer Leitung
Method and apparatus for the non-intrusive measurement and for the regulation of flow rates of different phases of a multiphase fluid flowing within a conduit

(30) Priorité: 15.03.1994 FR 9402981
(43) Date de publication de la demande: 27.09.1995
(73) Titulaire: TOTAL Société anonyme dite :, 92800 Puteaux (FR); SYMINEX Société Anonyme dite:, F-13275 Marseille Cedex 09 (FR)
(72) Inventeur: Bernicot, Michel, F-78100 Saint Germain en Laye (FR); Romanet, Thierry, F-13010 Marseille (FR)
(74) Mandataire: Jolly, Jean-Pierre

(56) Documents cités:
- EP-A- 0 465 032
- WO-A-89/05974
- WO-A-93/14382
- WO-A-93/24811

## Description

La présente invention s'applique au domaine de la protection des installations de production d'hydrocarbures, et en particulier des installations situées en aval des têtes de puits sous-marins et/ou situées sur des plate-formes (inhabitées ou non) en milieu marin.

Les effluents recueillis à la sortie d'un puits pétrolier sont généralement polyphasiques, c'est-à-dire qu'ils sont constitués d'un mélange de gaz, de liquide, et éventuellement de solides. Les effluents sont conduits à travers une canalisation soit jusqu'aux installations côtières, soit jusqu'à une plate-forme de traitement. En raison de l'instabilité des écoulements polyphasiques, il se forme inévitablement au sein de la canalisation, des bouchons de liquide et/ou des poches de gaz de longueurs plus ou moins importantes. En sortie de canalisation, le fluide transporté est reçu dans un ballon de séparation dans lequel s'opère une décantation naturelle du fluide polyphasique en ses différentes phases. La phase liquide est extraite au fond du ballon et transportée jusqu'à des installations de séparation et de traitement, tandis que la phase gazeuse est prélevée à la partie supérieure du ballon et est traitée et comprimée avant utilisation locale ou transport.

La présente invention a pour objet de déterminer les débits de liquide et de gaz qui traversent la canalisation, grâce à la mesure de la longueur et de la vitesse desdits bouchons et desdites poches. La connaissance des caractéristiques des bouchons et des poches permet, grâce à une régulation adéquate :
- d'éviter l'arrivée au ballon de séparation de grandes poches de gaz, ce qui obligerait à diriger l'excès de gaz vers les torchères où il serait brûlé en pure perte,
- de maintenir dans le ballon de séparation un niveau relativement stable de la phase liquide et d'éviter donc son engorgement par suite de l'arrivée d'un bouchon liquide de grande longueur,
- et d'optimiser les dimensions du ballon et des équipements de traitement qui, jusqu'à présent, devaient être surdimensionnés pour pouvoir absorber les fluctuations importantes des effluents.

L'invention concerne un procédé de mesure non-intrusive et d'asservissement des débits des phases gazeuse et liquide contenues dans un fluide polyphasique qui circule dans une canalisation, par exemple entre un puits de pétrole et un ballon de séparation dans lequel lesdites phases gazeuse et liquide sont séparées puis envoyées à des équipements de traitement respectifs, ledit procédé étant caractérisé en ce qu'il consiste :
- à exciter mécaniquement la canalisation et le liquide polyphasique qu'elle contient, en appliquant en au moins deux zones de la surface extérieure de la canalisation situés en amont dudit ballon de séparation, une excitation de type vibratoire ou acoustique, chaque zone excitée constituant une zone de mesure,
- à enregistrer, en au moins un point extérieur à la canalisation par zone de mesure, les vibrations mécaniques transmises via la canalisation,
- à traiter lesdites vibrations et à les analyser afin d'en déduire des informations sur la présence de poches de gaz et/ou bouchons liquides dans le fluide polyphasique ainsi que sur la longueur et la vitesse de déplacement desdits bouchons liquides et poches de gaz,
- et à asservir auxdites informations, les débits d'entrée de la phase gazeuse et de la phase liquide dans lesdits équipements de traitement respectifs afin de ne pas dépasser leur capacité de traitement ou de stockage.

L'invention concerne également un dispositif pour la mise en oeuvre du procédé susmentionné, caractérisé en ce qu'il comprend :
- un excitateur mécanique ou acoustique par zone de mesure, extérieur à la canalisation et permettant d'appliquer à celle-ci, en au moins deux zones de sa surface extérieure, une vibration mécanique, lesdits excitateurs étant montés en amont dudit ballon de séparation,
- au moins un capteur par zone de mesure, ledit capteur étant disposé au voisinage de la canalisation, à l'extérieur de celle-ci et étant susceptible de recueillir les informations vibratoires et/ou acoustiques qui lui parviennent via la canalisation, en provenance de l'excitateur,
- un appareillage de traitement et d'analyse qui permet de déduire desdites informations vibratoires des informations sur la teneur en gaz et en liquide (huile et eau) du fluide polyphasique, ainsi que sur la longueur et la vitesse de déplacement des bouchons liquides et des poches d'air,
- et un appareillage de contrôle permettant d'asservir les vannes d'entrée desdits équipements pétroliers, de manière à réguler le débit d'entrée de ces phases en fonction de la capacité de stockage ou de traitement desdits équipements.

Par le brevet EP-0 465 032 on connaît déjà un système de mesure non-intrusif pour l'étude des écoulements de fluides polyphasiques à bouchons dans une canalisation. Toutefois, dans ce système on n'effectue pas d'excitation active de la canalisation, comme c'est le cas pour l'invention, mais une écoute passive des bruits qui sont directement générés par le passage des bouchons dans la canalisation, à l'aide de capteurs extérieurs. De plus, ce système ne comporte pas de moyens d'asservissement permettant d'agir sur les vannes d'entrée aux équipements de traitement des phases gazeuse et liquide.

Le brevet WO-A-89 05974 concerne un système de détermination de la composition d'un fluide polyphasique circulant dans une canalisation. Toutefois ce système comprend des moyens intrusifs pour générer des bruits de turbulence ou de cavitation au sein du fluide, sous forme d'une vanne de choc. De plus, il ne comporte pas non plus de moyens d'asservissement des vannes d'entrée aux équipements de traitement.

Le brevet WO-A-93 14382 présente les mêmes inconvénients que le brevet précédent.

Le brevet WO-A-93 24811 concerne un système non-intrusif pour la mesure des débits massiques de gaz, d'huile et d'eau dans des écoulements polyphasiques à bouchons. Cependant, l'excitation n'est pas provoquée par un excitateur mécanique ou acoustique, mais par une source radioactive à rayons gamma.

L'invention sera à présent décrite en détail en regard des dessins annexés dans lesquels :
la figure 1 montre schématiquement une installation de transport d'hydrocarbures depuis un puits de production jusqu'aux équipements de traitement ;
la figure 2 est une vue schématique en coupe d'une canalisation de transport d'un fluide polyphasique et du dispositif d'une zone de mesure selon l'invention ;
la figure 3 montre un signal brut relevé par un capteur, avant traitement ; et
la figure 4 montre le signal après traitement.

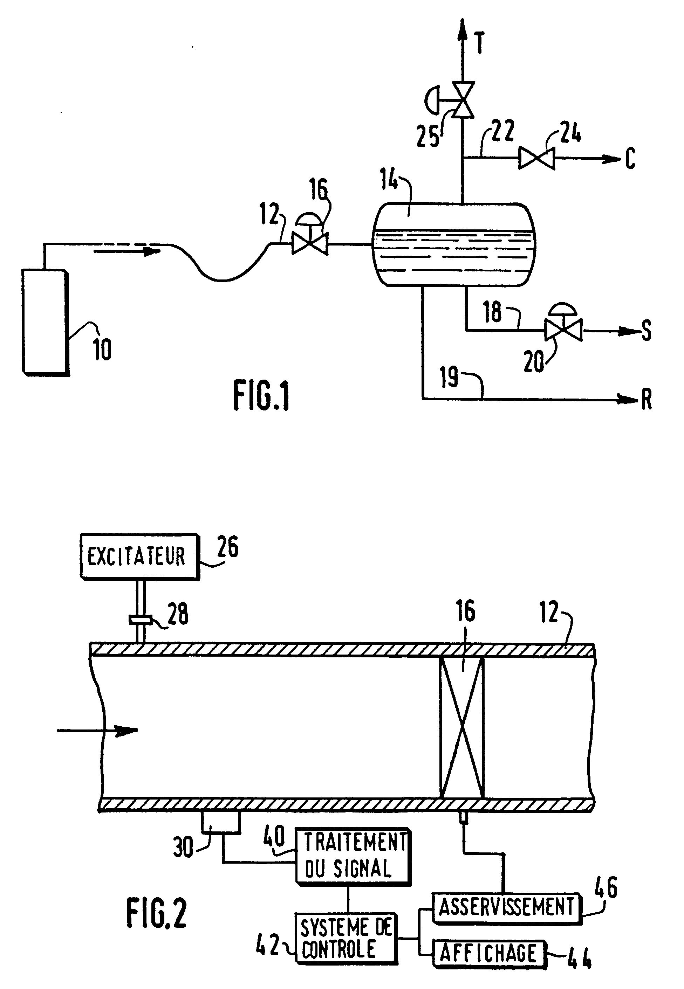

L'installation représentée sur la figure 1 comprend un puits de pétrole 10, par exemple sous-marin, d'où le fluide polyphasique est acheminé, par une canalisation en acier 12, jusqu'à des unités de traitement se trouvant sur la côte. Celles-ci comprennent un ballon de séparation 14 où le fluide est reçu pour subir une décantation. L'entrée du ballon est commandée par une vanne d'admission 16. Après décantation, l'huile et l'eau sont soutirées au fond du ballon par deux canalisations 18 et 19. L'huile est conduite à travers une vanne 20 vers des installations de séparation et traitement S situées en aval et l'eau est traitée avant rejet à la mer ou réinjection. La phase gazeuse est amenée à un compresseur C par une canalisation 22 commandée par une vanne 24. En cas d'excès de gaz dans le ballon, une partie du gaz est dérivée par la vanne 25 vers la torchère T où elle est brûlée.

Pour optimiser le fonctionnement des équipements pétroliers et éviter en particulier leur surdimensionnement, on utilise, selon l'invention, le dispositif de mesure de débit et d'asservissement qui est illustré par la figure 2. Sur cette figure, on a représenté un tronçon de canalisation 12 situé en amont du ballon de séparation 14.

Le dispositif selon l'invention comprend un excitateur 26 par zone de mesure qui permet d'appliquer à la canalisation des excitations vibratoires et acoustiques. Sur la figure 2, on n'a représenté qu'un excitateur correspondant à une zone de mesure. L'excitateur peut être alimenté en énergie électrique, pneumatique ou hydraulique. Il peut être constitué par un impacteur, un pot vibrant, ou des pastilles piézoélectriques en céramique.

L'excitateur 26 applique une excitation vibratoire sur un point de la surface extérieure de la canalisation. Une jauge de contrainte ou capteur d'effort 28 est prévue pour vérifier le bon fonctionnement en niveau d'énergie et en fréquence de l'excitateur.

A proximité de l'excitateur est disposé à l'extérieur de la canalisation 12, au moins un capteur 30, qui recueille les informations vibratoires et acoustiques qui lui parviennent à travers la canalisation. Ces informations sont transformées en signaux électriques qui sont représentatifs des caractéristiques de la canalisation et du fluide polyphasique transporté. Ces signaux permettent donc de déterminer la composition instantanée du fluide passant au droit du capteur, et en particulier la présence de poches de gaz ou de bouchons liquides dans le fluide.

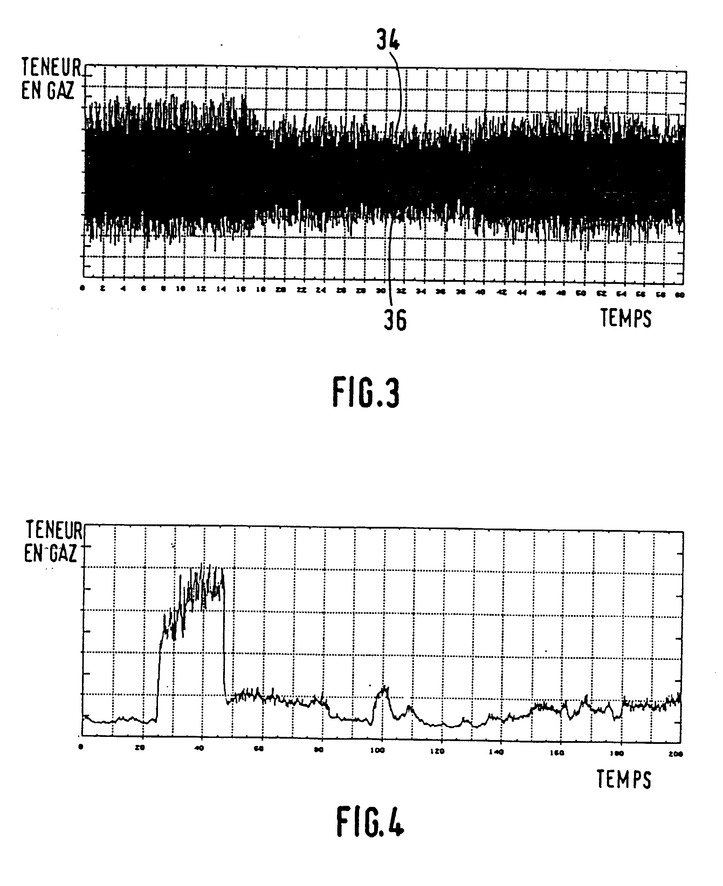

La figure 3 montre un enregistrement obtenu lors du passage d'un bouchon liquide. A ce moment en effet, la résonance qui est due au passage d'une poche d'air disparaît. Il en résulte une diminution de l'énergie vibratoire recueillie par le capteur et l'apparition de creux 34, 36 dans les enveloppes supérieure et inférieure de l'enregistrement.

L'interprétation du signal brut de la figure 3 étant difficilement exploitable, ce signal est traité dans un dispositif de traitement 40 qui forme l'enveloppe inverse du signal temporel et qui filtre le signal afin d'en éliminer les parasites. La figure 4 montre un exemple de signal traité.

Le signal ainsi traité est reçu par un dispositif de contrôle 42, lequel l'envoie à un affichage 44 et à un dispositif d'asservissement 46. Celui-ci commande les vannes 16, 20, 24 (seule la vanne 16 représentée sur la figure 2 pour la clarté du dessin), régulant ainsi le passage des différentes phases de l'effluent vers le ballon de séparation 14, vers le compresseur C et vers les installations de séparation et de traitement S.

On notera que deux zones de mesure au minimum sont nécessaires pour obtenir les caractéristiques de longueur et de vitesse d'un bouchon liquide ou d'une poche de gaz.

L'invention permet de déterminer par des mesures non-intrusives et non-radioactives les quantités de liquide et de gaz débitées contenues dans un fluide polyphasique grâce à la mesure de la longueur et de la vitesse des bouchons liquides et des poches de gaz qui se forment dans ledit fluide.

## Revendications

1. Procédé de mesure non-intrusive et d'asservissement des débits des phases gazeuse et de liquide contenues dans un fluide polyphasique qui circule dans une canalisation (12), par exemple entre un puits de pétrole et un ballon de séparation (14) dans lequel lesdites phases gazeuse et liquide sont séparées puis envoyées vers des équipements de traitement respectifs (14, C, S), caractérisé en ce qu'il consiste :
- à exciter mécaniquement la canalisation (12)et le fluide polyphasique qu'elle contient, en appliquant en au moins deux zones de la surface extérieure de la canalisation situées en amont dudit ballon de séparation (14), une excitation de type vibratoire ou acoustique, chaque zone excitée constituant une zone de mesure,
- à enregistrer, en au moins un point extérieur à la canalisation par zone de mesure, les vibrations mécaniques transmises via la canalisation,
- à traiter lesdites vibrations et à les analyser afin d'en déduire des informations sur la présence de poches de gaz et/ou bouchons liquides dans le fluide polyphasique ainsi que sur la longueur et la vitesse de déplacement desdits bouchons liquides et poches de gaz,
- et à asservir auxdites informations les débits d'entrée de la phase gazeuse et de la phase liquide dans lesdits équipements de traitement respectifs afin de ne pas dépasser leur capacité de traitement ou de stockage.

2. Dispositif pour la mise en oeuvre du procédé selon la revendication 1, caractérisé en ce qu'il comprend :
- un excitateur mécanique ou acoustique (26) par zone de mesure, extérieur à la canalisation et permettant d'appliquer à celle-ci (12) en au moins deux zones de sa surface extérieure une vibration mécanique, lesdits excitateurs étant montés en amont dudit ballon de séparation (14),
- au moins un capteur (30) par zone de mesure, ledit capteur étant disposé au voisinage de la canalisation, à l'extérieur de celle-ci, et étant susceptible de recueillir les informations mécaniques et/ou acoustiques qui lui parviennent le long de la canalisation, en provenance de l'excitateur,
- un appareillage de traitement et d'analyse (40) qui permet de déduire desdites informations mécaniques et/ou acoustiques, des informations sur la teneur en gaz et en liquide (huile et eau) du fluide polyphasique, ainsi que sur la longueur et la vitesse de déplacement des bouchons liquides et des poches d'air, deux zones de mesure au moins étant nécessaires pour accéder aux informations longueur et vitesse,
- et un appareillage de contrôle (42) permettant d'asservir des vannes d'entrée (16, 20, 24) desdits équipements pétroliers (14, C, S), de manière à réguler le débit d'entrée de ces phases en fonction de la capacité de stockage ou de traitement desdits équipements.

3. Dispositif selon la revendication 2, caractérisé en ce qu'il comprend en outre une jauge de contrainte ou capteur d'effort (28) pour mesurer l'intensité et la fréquence de la vibration émise par l'excitateur (26).

## Patentansprüche

1. Verfahren zum nicht-intrusiven Messen und zum Regeln der Durchflußleistung von Gas- und Flüssigkeitsphasen in einem Mehrphasenfluid, das in einer Leitung (12) fließt, beispielsweise zwischen einem Erdölbohrloch und einem Trennungsgefäß (14), in dem die Gasphasen und die Flüssigkeitsphasen getrennt und dann in jeweilige Verarbeitungseinrichtungen (14, C, S) weitergeleitet werden, gekennzeichnet durch:
- mechanisches Anregen der Leitung (12) und des darin enthaltenen Mehrphasenfluids durch Anlegen einer Anregung des Schwingungs- oder akustischen Typs an mindestens zwei Zonen der Außenfläche der Leitung, die sich flußaufwärts des Trennungsgefäßes (14) befinden, wobei jede angeregte Zone eine Meßzone darstellt,
- Aufzeichnen der über die Leitung übertragenen mechanischen Schwingungen an mindestens einem äußeren Punkt der Leitung pro Meßzone,
- Verarbeiten und Analysieren der Schwingungen, um daraus Informationen über die Anwesenheit von Gastaschen und/oder Flüssigkeitspfropfen in dem Mehrphasenfluid sowie über die Länge und die Fortbewegungsgeschwindigkeit dieser Flüssigkeitspfropfen und Gastaschen abzuleiten,
- und Verknüpfen dieser Informationen mit den Eintrittsflußleistungen der Gasphase und der Flüssigkeitsphase in den jeweiligen Verarbeitungseinrichtungen, um deren Verarbeitungs- oder Aufnahmekapazität nicht zu überschreiten.

2. Vorrichtung zur Durchführung des Verfahrens gemäß Anspruch 1, gekennzeichnet durch:
- einen mechanischen oder akustischen Anreger (26) pro Meßzone, der außerhalb der Leitung angeordnet ist und es ermöglicht, an die Leitung (12) in mindestens zwei Zonen ihrer Außenfläche eine mechanische Schwingung anzulegen, wobei die Anreger flußaufwärts des Trennungsgefäßes (14) angeordnet sind,
- einen Meßfühler (30) pro Meßzone, der benachbart zu der Leitung außerhalb derselben angeordnet ist und der dazu geeignet ist, die mechanischen und/oder akustischen Informationen, die ausgehend von dem Anreger entlang der Leitung auf ihn zukommen, aufzunehmen,
- eine Verarbeitungs- und Analyseeinrichtung (40), die es gestattet, aus den mechanischen und/oder akustischen Informationen Informationen über den Gas- und Flüssigkeitsgehalt (Öl und Wasser) des Mehrphasenfluids sowie über die Länge und die Fortbewegungsgeschwindigkeit von Flüssigkeitspfropfen und Gastaschen herzuleiten, wobei mindestens zwei Meßzonen notwendig sind, um Zugriff auf Informationen über Länge und Geschwindigkeit zu erhalten,
- und eine Kontrolleinrichtung (42), die es gestattet, Eintrittsventile (16, 20, 24) der Erdöleinrichtungen (14, C, S) derart zu regeln, daß die Eintrittsflußleistung dieser Phasen in Funktion der Aufnahme- oder Verarbeitungskapazität dieser Einrichtungen reguliert wird.

3. Vorrichtung nach Anspruch 2, dadurch gekennzeichnet, daß sie des weiteren einen Dehnungsmeßstreifen oder einen Beanspruchungsmesser (28) zum Messen der Intensität und der Frequenz der von dem Anreger (26) emittierten Schwingung aufweist.

## Claims

1. Process for the non-intrusive measurement and regulation of the flow rates of gas and liquid phases contained in a polyphasic fluid which circulates in a pipeline (12), for example between an oil well and a separating tank (14) in which the said gas and liquid phases are separated and then conveyed to respective treatment facilities (14,C,S), characterized in that it consists of :
- mechanically exciting the pipeline (12) and the polyphasic fluid contained therein, by applying to at least two zones of the outer surface of the pipeline situated upstream from the said separating tank (14), an excitation of the vibratory or acoustic type, each excited zone constituting a measuring zone,
- recording, at least at one point outside the pipeline per measuring zone, the mechanical vibrations transmitted through the pipeline,
- processing the said vibrations and analyzing them in order to deduce information on the presence of gas pockets and/or liquid locks in the polyphasic fluid as well as on the length and speed of progress of the said liquid locks and gas pockets, and
- regulating, by means of the said information, the input flow rates of the gas phase and liquid phase into the said respective treatment facilities so that their treatment or storage capacity is not exceeded.

2. Device for implementing the process according to claim 1, characterized in that it comprises :
- one mechanical or acoustic exciter (26) per measuring zone, outside the pipeline and enabling a mechanical vibration to be applied thereto (12) in at least two zones of its outer surface, the said exciters being mounted upstream from the said separating tank (14),
- at least one sensor (30) per measuring zone, the said sensor being positioned in the vicinity of and outside the pipeline, and being able to gather mechanical and/or acoustic data reaching it along the pipeline, coming from the exciter,
- a processing and analytic apparatus (40) which makes it possible to deduce, from the said mechanical and/or acoustic data, data on the gas and liquid content (oil and water) of the polyphasic fluid as well as the length and speed of progress of liquid locks and air pockets, at least two measuring zones being necessary for accessing length and speed data,
- and a control apparatus (42) enabling the inlet valves (16, 20, 24) of the said oil facilities (14,C,S) to be regulated so as to adjust the input flow of these phases in relation to the storage or treatment capacity of the said equipment.

3. Device according to claim 2, characterized in that it additionally comprises a strain gauge or force sensor (28) for measuring the intensity and frequency of the vibration emitted by the exciter (26).
